# EUROPEAN PATENT SPECIFICATION

(11) **EP 3 009 950 B1**
(45) Date of publication and mention of the grant of the patent: **25.09.2019**
(21) Application number: 14189367.7
(22) Date of filing: 17.10.2014
(51) Int. Cl.: G06F 21/31

(54) **METHOD AND APPARATUS FOR CONTINUOUS AND IMPLICIT LOCAL AUTHENTICATION OF WIRELESS MOBILE USERS BASED ON DYNAMIC PROFILING OF CONDUCT PATTERNS**
VERFAHREN UND VORRICHTUNG ZUR KONTINUIERLICHEN UND IMPLIZITEN LOKALEN AUTHENTIFIZIERUNG VON DRAHTLOSEN MOBILEN BENUTZERN AUF DER BASIS DER DYNAMISCHEN PROFILIERUNG VON VERHALTENSMUSTERN
PROCÉDÉ ET APPAREIL PERMETTANT L'AUTHENTIFICATION LOCALE CONTINUE ET IMPLICITE D'UTILISATEURS D'APPAREILS MOBILES SANS FIL SUR LA BASE DU PROFILAGE DYNAMIQUE DES MOTIFS DE CONDUITE

(43) Date of publication of application: 20.04.2016
(73) Proprietor: Fundació Eurecat, 08290 Cerdanyola del Vallès (ES); Caixabank S.A., 08028 Barcelona (ES)
(72) Inventor: Paredes, Ignasi, 08030 Barcelona (ES); Parra, Javier, 08930 Sant Adrià de Besòs (Barcelona) (ES); Reyes, Mario, 22520 Fraga (Huesca) (ES); Maawad, Mario, 08013 Barcelona (ES)
(74) Representative: Mohammadian, Dario

(56) References cited:
- EP-A1- 2 629 228
- WO-A1-2013/155143
- US-A1- 2010 175 116

## Description

### TECHNICAL FIELD

The present invention relates generally to the field of wireless mobile device security and access control, and in particular, to enhancing the authentication of wireless users.

### BACKGROUND OF THE INVENTION

In recent years, the worldwide penetration of smartphones connected to the Internet has increased intensely. As a consequence, the amount of associated risks and vulnerabilities have also raised analogously due to the ever growing list of applications available, ranging from chatting to e-mails and mobile banking. There are certain kinds of applications such as mobile banking, or e-commerce, which deal with extremely sensitive information. However, from the security point of view, these applications still mostly rely solely on password-based authentications, making them vulnerable to attacks, such as impersonation due to stolen credentials.

Biometric approaches, that is, authentication based on, for example, voice recognition, face recognition, or fingerprints, have existed for years but have not been fully integrated into the mainstream consumer electronics yet due to their complexity and price. Publication WO-A-2013/155 143 refers to authentication based on a previous location of the device, disclosing the generation of a familiar usage pattern via the periodic collection of location information and giving the device's user access whenever the device's location matches the familiar usage pattern. Publication EP-A-2629228 refers to a location-dependent security protocol for a portable electronic device wherein, when a user attempts to access the device or an application of the device, the device will implement a first authentication process if the device is in one of the familiar areas, or a different authentication process if the device is not in one of the familiar areas. Publication US-A-2010/175116 refers to comparing usage or mobility characteristics of an electronic device (e.g., a location) with current parameters. A determination as to whether to permit an operation (e.g., access, e-commerce transaction) at the device can be based at least in part upon a degree to which the current parameters conform with the usage or mobility characteristics.

Implicit authentication has also been proposed as a solution to access control. Implicit authentication essentially eliminates the necessity of using neither passwords nor biometric data and focuses exclusively on user behaviour. Within implicit authentication the user is identified by just recognizing his behavior, without any explicit authentication request. This approach is stronger than prior explicit authentication proposals due to the multiple variables that uniquely identify a person or user. Due to this large number of personal information, a large number of variables should be carefully falsified to impersonate someone (for example, location, last calls, list of payments, most used applications, user preferences, frequent locations, recurrently contacted people, and so on).

One drawback of this new mechanism is that it is performed remotely, which poses serious security and privacy risks due mainly to the normally insecure data connection and the large amount of user-related data and variables exchanged over insecure connections. In other words, the confidentiality of the user's sensitive and private information is jeopardized. Since it relies with exchanging data with a remote server, in case the wireless device finds itself without any external communication, it loses all implicit authentication capabilities.

Moreover, due to its remote nature, such authentication is performed on-demand, that is, it only validates that the user is legitimate once a remote resource is accessed, neither before nor afterwards. Hence it is generally not reliable as only a small amount of behavioural data is utilized which, more often than not, is out of date, and.

Another drawback is that it also requires the user to explicitly authorize model updates. In other words, the model does not account for the user's conduct changes automatically. In such cases, authentication fails as the mechanism does not recognize the legitimate user, assuming the changes in user-related information are due to an unauthorized access by an illegitimate user, resulting in many false negative determinations. Considering the number of applications currently run in real-time in smart phone devices, or similar devices, numerous continuous requests for explicit authentication are necessary, resulting in a cumbersome non-user friendly authentication mechanism.

Therefore a need exists to effectively solve the abovementioned problems.

### SUMMARY

It is therefore an object of the present invention to provide solutions to the above mentioned problems. In particular it is the objective of the invention to provide enhanced implicit authentication of wireless communication device users wherein the abovementioned problems are resolved. This is achieved by continuously performing such implicit authentication and always locally on the device. This means that the user identity is continuously being checked locally while using the device, not only when a remote service is accessed.

This is more secure than previous proposals because:
1. It avoids sending sensitive information over a data connection. The user does not need to trust any external entity such as an authentication server or a network operator. It is therefore more secure.
2. It works even in isolated situations, with no external communication capability. This is because the authentication process is conducted locally and the device does not need to establish a connection with a network operator. It is therefore more robust.
3. It provides higher accuracy than on-demand authentication as it is able to continuously determine if the current user of the mobile device is allowed to use the wireless phone or not using a large amount of recently updated user-related information. It is therefore more accurate.
4. It dynamically adapts to the user's behaviour and therefore automatically identifies significant behavioural changes by the same user without having to prompt for confirmation. Hence the most recent behaviour is reflected in real-time, removing the inaccuracies of static models and providing a more user-friendly authentication less cumbersome to the user. It is therefore more user-friendly.

Hence, the invention provides enhanced user authentication which is user-friendly, more secure, accurate, and robust.

Therefore, it is the object of the present invention to provide an apparatus in a wireless communication device for enhanced user authentication.

It is another object of the present invention to provide a method for enhanced user authentication in a wireless communication device.

It is another object of the present invention to provide a computer readable medium comprising instructions, once executed on a processor in a wireless communication device, for performing the steps of a method for enhanced user authentication.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular the invention provides methods, apparatus, systems, processors, program codes, computer readable media, and other apparatuses and elements that implement various aspects, configurations and features of the invention, as described below.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIG. 1** depicts a wireless communications device comprising an apparatus according to an embodiment of the invention.
**FIG. 2** depicts components of the authentication apparatus.
**FIG. 3** depicts a method for enhanced implicit authentication according to an embodiment of the invention.
**FIG. 4** depicts a method for generating user models.
**FIG. 5** depicts a method for updating user models.
**FIG. 6** depicts a method for restoring user models.

### DETAILED DESCRIPTION OF THE INVENTION

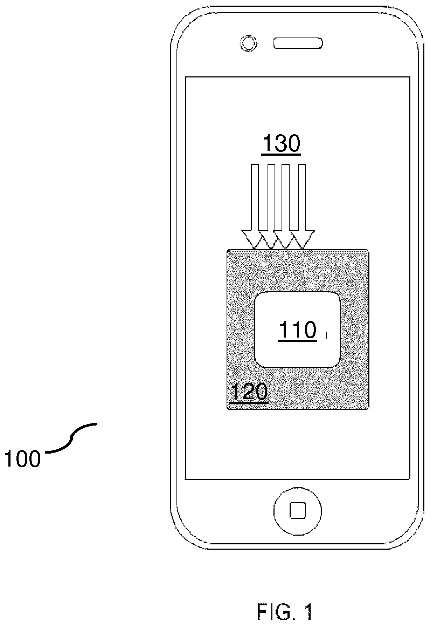

**FIG. 1** depicts a wireless communications device 100 comprising an apparatus 110 according to an embodiment of the invention. The apparatus operates to implicitly authenticate and/or identify a user while he is using the wireless device. The process is continuous in that the identity is constantly verified without any explicit interaction required from the user's side. In a first learning phase the user's behaviour is monitored in order to generate a user profile that captures the most significant conduct patterns. Optionally, this can also be implemented manually by the user himself, introducing most common behavioural data. Manual data introduction can replace the preferred automatic user profile generation, or complement it.

In a second operative phase, the user profile is used to authenticate the user implicitly, that is, without user-intervention. Additionally, in an aspect of the invention, the user profile is continuously updated so that the implicit authentication is adaptive to changes in the user's behaviour, or interaction with his environment.

The user profile models the user's behavior patterns based on metrics 130 provided from the device. The metrics monitored both in the learning phase as well as the operative phase comprise:
- Location data history (GPS, telephone signal), most frequent locations
- Web browsing history, most frequently visited Internet pages
- Calls history, most frequent contacts
- SMS history, most frequent contacts
- Application usage history, most frequently used apps
- WiFi access points history, most frequented spots
- list of payments, most frequent transactions
- user preferences, interaction with one's own device

Nonetheless, the invention is not limited to this list of metrics, and the skilled person will readily derive other user-related information which can be extracted from a communication's device and which provides an indication as to his person or behaviour.

In one aspect, the authentication process may be performed locally inside a Trusted Execution Environment TEE 120. Hence its execution is completely isolated and, therefore, guarantees that any code and data is protected at run-time. The persistently stored data belonging to the authentication system being continuously accessed by other applications is also thereby protected.

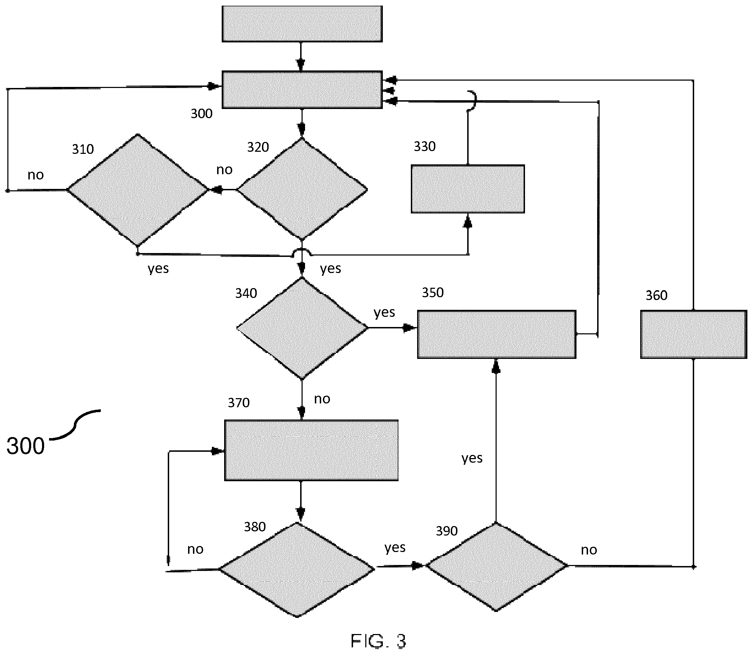

**FIG. 3** depicts a method for enhanced implicit authentication. The method is iterative in order to dynamically update data and user models. Data samples are collected 300 by the data manager in a first step to update the most recently collected user-related information. A test is performed to determine 320 whether a user model exists already. In case negative, a test is performed to determine 310 whether a sufficient number of samples have been collected. In case negative, the process returns to the first step to collect 300 further samples.

Once a sufficiently large number of samples representative of standard user behaviour has been collected, the user model is generated 330. In general, the more data samples, the better its accuracy. There are lots of algorithms for anomaly detection ranging from classical techniques based on forecasting to signal analysis or dimensionality reduction. In particular, the first category includes algorithms such as Exponentially Weighted Moving Average EWMA, and Auto-Regressive Integrated Moving Average ARIMA. Signal analysis is comprised essentially by Fourier transforms and similar techniques. Finally, principal component analysis PCA, one of the most widely used methods for dimensionality reduction, is used to transform the original data set into a new set of variables or principal components (PC), which are sorted decreasingly according to their variance. Each PC is formed by a linear combination of the original fields. Based on the fact that strongest patterns usually summarize normality, PCA is used to extract only the most relevant PCs. This set of components is defined as the normal subspace and all the other PCs representing less significant variations define the abnormal subspace. The number of normal PCs must be configured accordingly to each environment and the sensitivity desired for the detector.

Next, implicit authentication is performed wherein it is determined 340 whether the current user of the wireless device is authorized to use the device by comparing the user model with the current data sample. If the current behaviour does not coincide with the user model, the system cannot guarantee that the user is legitimate and, therefore, it locks 370 the device. This deviation using PCA is detected by measuring the magnitude of the projection of the incoming data into the residual subspace described above (if such magnitude overcomes a threshold, an anomaly is flagged). Note that the detection of a model mismatch is not limited to the PCA algorithm only. At this point, an explicit authentication mechanism is required in order to unlock the device.

On the contrary, if the current sample matches the user model, the model is properly updated 350 using the latest user-related information. This update is also performed in case the explicit authentication mechanism is successful. Subsequently, the device user is requested to notify whether the implicit authentication failed to recognize the user, or it was a non-legitimate user or attacker who took control of the device.

In case the user confirms that his device has not been neither stolen nor compromised, the current user model being used is confirmed as a valid user model for continued operation. However, in case the explicit authentication is successful but legitimacy is not confirmed by any rightful user, once the device is recovered by the owner, the user model is restored 360 to the last valid version saved in the data storage.

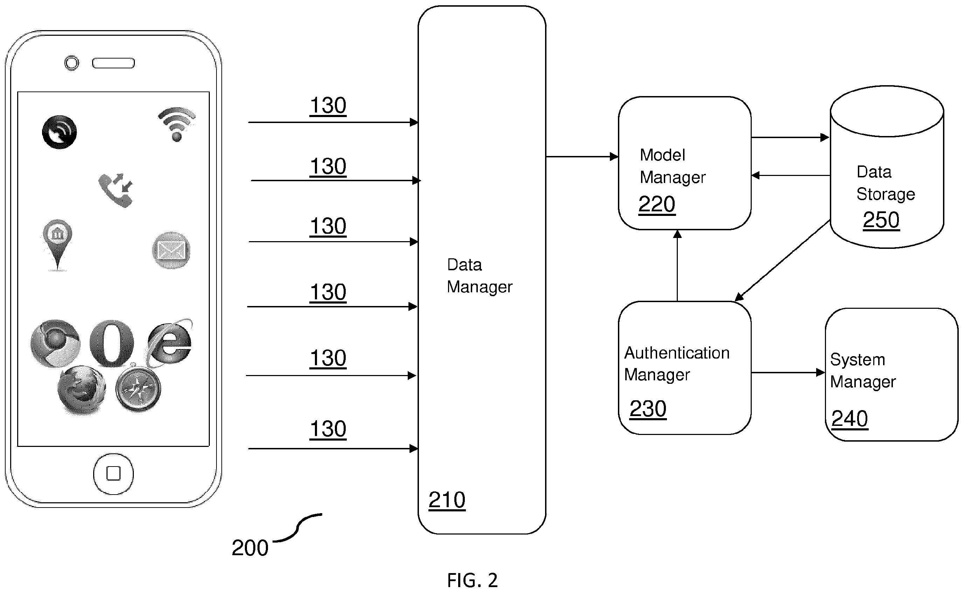

**FIG. 2** depicts components of the authentication apparatus 200, which comprises a Data Manager DM 210, a Model Manager MM 220, an Authentication Manager AM 230, a System Manager SM 240 and a Data Storage DS 250. As discussed, the authentication apparatus is hosted locally within the communications device. The wireless device is depicted only to represent the provision of user-related data and information, in the form of metrics 130.

The first component of the authentication apparatus is the data manager 210, or means for managing data, which gathers the user-related data 130 relating to user behaviour, and prepares the data in a format suitable for posterior analysis. This component collects the data directly from the wireless device to feed the model manager and authentication managers. It takes care of interacting with the mobile Operating System APIs and preparing all the data. In particular, it first homogenizes all the data sources in order to eliminate any possible gaps in the time series of each metric monitored (for example, GPS coordinates). Next, it aggregates or summarizes the data in a certain manner: for example, rather than reporting the list of calls within the last minute, it might provide the number of calls, its entropy or any other variation that might be convenient depending on each case.

In one aspect it may also take into account a sample frequency parameter which determines how often data samples are processed and sent to the model manager. For example, data samples might be aggregated into 1-minute or 10-minute windows. Depending on this parameter, the data manager will group and summarize the data of each time series accordingly. Therefore the sample frequency parameter determines how regularly the authentication validation is performed. If, for example, samples are only processed every 3 hours, the system will not be able to detect any misbehavior before that time expires. On the contrary, high frequency updates such as seconds or minutes, while improving the effectiveness of the authentication system, will also require more resources and therefore, might have an important impact on the performance of the device itself.

The model manager 220, or means for model managing, is responsible for generating a user profile, or user model, based on the user-related data. It also updates the user model continually by periodically fetching updated user-related information. The model manager keeps an identified version of the last user model in data storage 250, or storage means, in case it has to be restored. In one aspect, the automatic model generation is replaced, or complemented, by additional information provided by the user itself. The identified version comprises additional information such as time, or date, or location, when the user model was last updated with valid user-related data.

Regarding user model generation, in general, the more samples that are collected, the higher will the accuracy of the model be, as it will reflect more accurately the user behaviour. However, a certain compromise between such accuracy and other requirements (for example, battery life or CPU usage) is necessary. For example, while collecting data samples during five days is more representative than samples corresponding to a single day, gathering data for longer periods such as months might not serve the purpose of achieving higher accuracies but only waste battery life, storage space and CPU usage. Under the assumption that most people behave according to weekly patterns with minor variations, that is, mainly work during weekdays and do some other activities during weekends, the inventors propose a period corresponding to a week-long of data in order to generate the user model. Note that the present invention is not limited by this setup and other configurations might be better depending on each user.

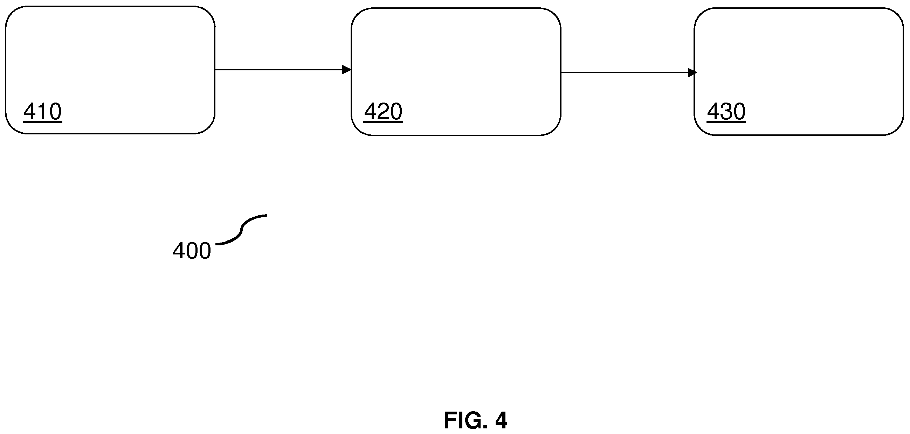

**FIG. 4** depicts a method 400 for generating the user model. The data manager, which continually collects new user-related information from the communication device, continually transmits 410 this recently fetched data to the model manager. Once a sufficient number of data samples are obtained, the user model is generated 420 based on the user's behavior. Once this user model is built, the model manager continually communicates 430 with the data storage. Hence the data storage stores the most recent user-related information as well as different versions of the user model. In order to allow later recoveries of specific user models stored at specific times, the user models are stored with additional information.

Regarding user model updating, as time goes by and the data manager keeps collecting and receiving new data samples of user behaviour, the model manager updates the user model accordingly in order to reflect as soon as possible any minor changes in the conduct patterns of the user. Nonetheless, the frequency of updating, the sample frequency, can be set in order to avoid unnecessary CPU operations, in particular read-and-write operations to the data storage. If the model manager determines that the last sample is a good match for the current user model, the model remains unchanged, thereby saving processing power. In case there is a minimal behavioural change, the new updated model is written to the data storage with additional information. In one aspect, the previous user model is not deleted, that is, it is kept in the data storage for any future restoration that might be necessary. In one aspect, the system stores a finite number of models. Such number can be set depending on user requirements (for example, a maximum amount of storage to be used).

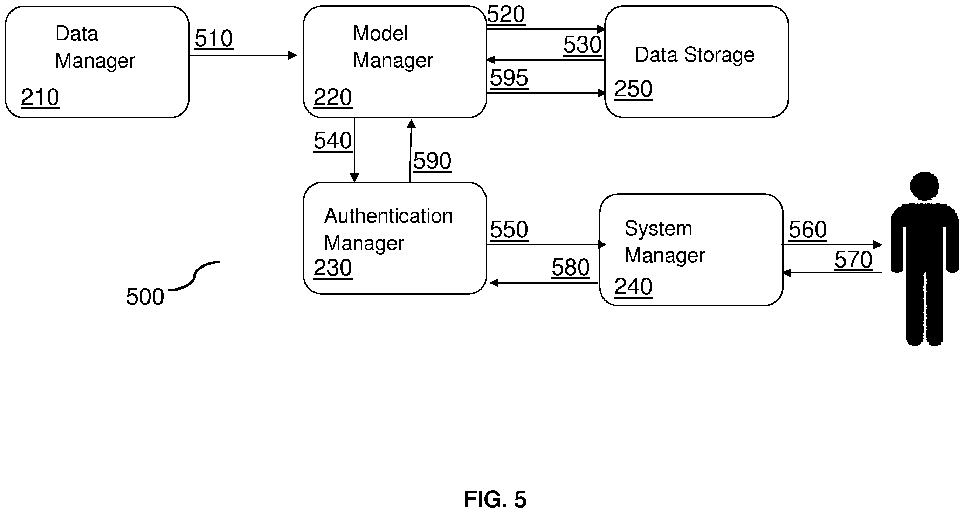

**FIG. 5** depicts a method 500 for updating the user model. First, the model manager receives 510 a user-related data sample from the data manager. Next, in order to determine if such sample matches the usual behavior of the user, the model manager retrieves 520 the last model from the data storage. Once fetched 530, the model manager sends 540 both the data sample and the model to the authentication manager in order to proceed with the authentication. In case the authentication manager determines that there is an authentication failure it will instruct 550 the system manager to lock the device and request the user to perform 560 an explicit authentication.

In case of successful explicit authentication, the authentication manager determines whether the authentication failure was due to a minor change in legitimate use, that is, whether it was the user himself utilizing the device once the lockdown occurred. This is implemented by asking 570 the user for confirmation. If the user confirms 580 and the outcome is positive, the user model is updated 580, 590 and saved 595 in the data storage. On the contrary, in case the user was not using the communications device (for example, due to a robbery), the method proceeds to restore the last valid user model.

Returning to the authentication result, in case the outcome is positive, and the user is implicitly authenticated, the authentication manager instructs the model manager to update the user model as valid using the last data set and storing it in the data storage for continued use.

Regarding user model restoration, the model manager restores a previously created model in those scenarios wherein implicit authentication fails and the device has been stolen or compromised. In these scenarios, the last samples of user behaviour collected by the device do not reflect his conduct but someone else's. Therefore, once the owner has recovered the device, he must indicate specific information only a rightful user could know, for example, the time, and/or the date, and/or location where he last recalls using his communication device on his own. Based on such time indicator, the model manager communicates with the data storage to look for the user model closest to that time instant and restores it as the current user model. This current model is then utilized for continued implicit authentication.

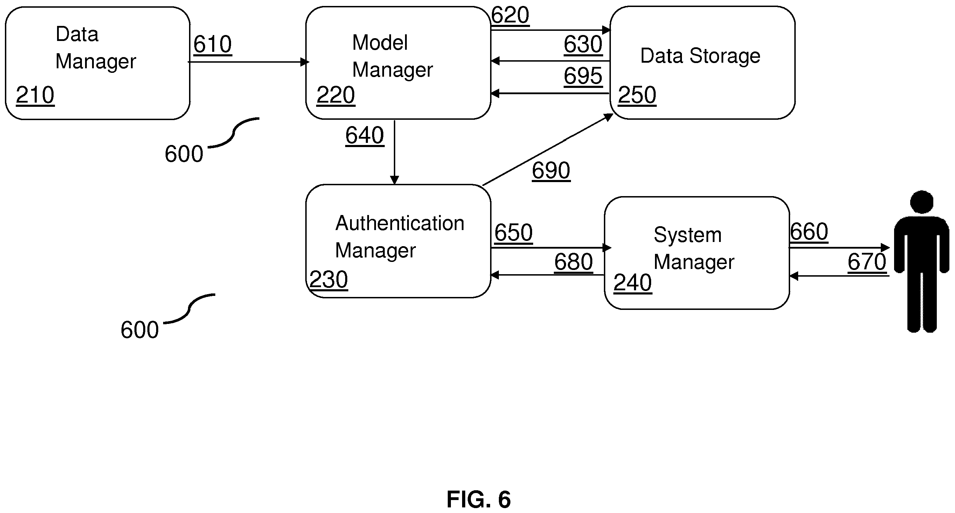

**FIG. 6** depicts a method 600 for restoring the user model. First, the model manager determines whether the last user-related data sample matches the most recent user model. This is implemented by collecting and receiving 610 the current data sample from the data manager, requesting 620 the current user model, and receiving 630 it from the data storage. It then subsequently instructs the authentication manager to perform 640 a comparison of data and model to verify whether they match, that is, to analyze if the current user managing the device is actually the legitimate owner. In case the result of the comparison is negative, and they do not match, the authentication has failed and the device is locked. At this point, explicit interaction from the user is needed to unlock 650 it. Up to this point, the operation procedure is identical to the method for updating the user model.

After explicit authentication, the user is requested 660 for confirmation of legitimate use. If the confirmation is positive, the user is indicating that the change in behavioural pattern which triggered the false authentication to be part of standard, common, or normal, behaviour, which should be integrated within the user model. In case the outcome is negative, and the legitimate owner of the device lost control of the device for a certain amount of time, the user confirms 670 providing information relating to when he last recalls having the device under his control. This information comprises at least one of time, date, and location. This information is passed 680 to the authentication manager, which communicates 690 it directly to the data storage. Using the user-entered information, the data storage fetches the user model with the best match, and restores it, which means that it replaces the current user model with the restored version, thereby making sure the last validly authenticated user model will be utilized for further implicit authentication. In case the user-provided information is, for example, only the time, the data storage fetches the user model with the timestamp closest to the
indicated time instant and sends 695 the user model to the model manager to set it as the new user model, thereby replacing the existing one.

As mentioned, the authentication manager 230, or means for managing authentication, is responsible for performing user authentication based on a comparison between the user model, generated and maintained by the model manager, and a periodic user-related data update obtained from the data manager. In case the result of the comparison is positive, the user's identity is authenticated, and a snapshot of the user model stored together with additional information such as time, and/or date, and/or location, when the user model was last updated with valid user-related data. The user is subsequently allowed to continue operating the device. However in case the result of the comparison is negative, the user's identity is not authenticated and the device is blocked from further usage.

The implicit authentication basically determines whether the user-related data samples received from the device can be described in terms of the latest user model, or in other words, whether such samples might have been generated from it. The result of this verification is a number that may take values on the interval [0, 1], and indicates the extent to which the implicit authentication is reliable or not. Depending on this result, the module determines that the samples have been drawn according to this model. In this case, it notifies the model manager and then remains idle until a new verification is required. If the authentication manager determines that the samples could not have been drawn according to this model, then a secondary, explicit authentication mechanism is employed.

The frequency at which implicit authentication is performed is the same sample frequency used by the data manager to fetch updated user-related information. This sample frequency is preset and can be user definable. The higher the frequency, the quicker the detection of a non-legitimate use of the device, but the higher the computational overhead and thus the higher the battery consumption. In other words, there is a trade-off inherent to the execution of this task between security and energy consumption. Hence an implicit authentication is enabled allowing users to select an optimum point of operation within the security-consumption trade-off. In particular, users may choose the level of security they
wish to attain, or alternatively, the battery consumption they are disposed to sacrifice.

As mentioned, once implicit authentication fails and explicit authentication is performed, in one aspect of the invention a further user model validation step is undertaken which guarantees that the user model being used is the correct one. In case of successful explicit authentication, the user confirms the device was being used legitimately and the authentication manager instructs the model manager to validate the current user model as the valid one for continued use. On the other hand, if the legitimate user confirms the device was not under his control, the authentication manager instructs the model manager to restore the user model to the last valid one before implicit authentication failure.

The system manager SM 240, or means for system management, is responsible for managing the communication between the different components, as well as with the remaining parts of the device. One of its functions is that of interacting with the wireless device to lock it in case of an authentication failure. It also communicates with the user to ask for the explicit authentication tokens which are sent to the authentication manager who will validate the tokens to determine if the current user is allowed to unblock and operate the device.

Within this context, explicit authentication schemes (for example, biometric-based face recognition, or fingerprint, or traditional PIN-code entry) are only considered as a mechanism to recover from device robbery or a lockdown once it is verified that the implicit authentication has failed. Therefore in case implicit authentication fails, the authentication manager performs explicit authentication and restores the communications device to its state corresponding to the last valid implicit authentication. All this process runs inside the trusted execution environment which ensures that both the data and the execution are isolated and secure from other malware applications attempting to gain access and manipulate them.

During operation of implicit authentication, the authentication manager validates the user's identity by continuously maintaining the user profile updated and checking whether last-fetched data samples match it. Since the user model contains user private and sensitive information, the comparison is carried out locally, in other words, the data always remains within the device. As mentioned, some advantages are that sensitive data is not transmitted over insecure communication links and the authentication can take place even in remote areas without any coverage, or fixed/wireless communication link. Since the process is continuous, the user model dynamically updates its data and is therefore adaptive to user-related behavioural changes, resulting in more accurate results wherein false negatives are minimised.

The data storage is responsible for storing a certain number of instances of the user model, such number being user-definable depending on the specific user requirements. Additionally, each instance has some additional information (timestamp, age and last valid location) to facilitate its more efficient lookup:
- Timestamp
   ∘ It contains the creation the time and date of the associated template profile.
- Last valid location
   ∘ It contains the location where the model update was stored/updated in the database for the last time (for example, if there is a lockdown, this field would contain the last time the model was saved in the data storage before the authentication failure).

The following table depicts information stored an example:

| **Template profile** | **Timestamp** | **Last valid location** |
|---|---|---|
| model1 | 01.05.2014 09:00 | 41.387015, 2.170047 (Plaga Catalunya, Barcelona) |
| model2 | 15.07.2014 22:00 | 41.3818188, 2.1635233 (Ronda Sant Antoni, Barcelona) |
| model3 | 16.07.2014 17:00 | 41.429639, 2.143603 (Vall Hebron, Barcelona) |

The variables *model1, model2* and *model3* represent the specific user models used at a particular time, that is, they contain the models defining the normal behavior of the user at that specific time window. The authentication manager compares the incoming data samples with these models to determine if the user is allowed to use the device or not.

Hence, the different embodiments of the invention provide a method and apparatus for enhanced implicit authentication of wireless device users which is user-friendly, more secure, accurate, and robust than existing implementations.

Furthermore, it is to be understood that the embodiments, realizations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

The various means may comprise software modules residing in RAM memory, flash memory, ROM memory, EPROM memory, EEPROM memory, registers, hard disk, a removable disk, a CD-ROM, or any other form of storage medium known in the art.

The various means may comprise logical blocks, modules, and circuits may be implemented or performed with a general purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The various means may comprise computer-readable media including, but not limited to, magnetic storage devices (for example , hard disk, floppy disk, magnetic strips, etc.), optical disks (for example , compact disk (CD), digital versatile disk (DVD), etc.), smart cards, and flash memory devices (for example , EPROM, card, stick, key drive, etc.). Additionally, various storage media described herein can represent one or more devices and/or other machine-readable media for storing information. The term "machine-readable medium" can include, without being limited to, various media capable of storing, containing, and/or carrying instruction(s) and/or data. Additionally, a computer program product may include a computer readable medium having one or more instructions or codes operable to cause a computer to perform the functions described herein.

What has been described above includes examples of one or more embodiments. However one of ordinary skill in the art will recognize that many further combinations and permutations of various embodiments are possible within the general inventive concept derivable from a direct and objective reading of the present disclosure. Accordingly, it is intended to embrace all such alterations, modifications and variations that fall within scope of the appended claims.

## Claims

1. An apparatus in a wireless communication device for enhanced implicit authentication of the user of the device, wherein the apparatus comprises:
means (210) for managing data configured for receiving user-related data collected from the wireless communication device, the user-related data being indicative of behavioural patterns of the device user;
means (230) for managing authentication configured for implicitly authenticating the device user without user-intervention by comparing the user-related data with a user model; and
means (220) for model managing configured for updating the user model as valid using the user-related data if the result of the implicit authentication is positive and explicitly authenticating (560) the device user if the result of the implicit authentication is negative; further comprising
requesting (570) the device user for confirmation of legitimate behaviour in case the result of the explicit authentication is positive, and updating (580, 590, 595) the user model with the latest user-related data if the outcome of the legitimate confirmation is positive; and
if the result of the explicit authentication is negative, requesting (670) the device user for information corresponding to the last device usage, wherein the last device usage information comprises at least one of time, date and/or location;
fetching from the storage means the user model which best matches the last device usage information provided; and
using the fetched user model as the current user model.

2. The apparatus of claim 1, wherein the user-related data and user model are stored in storage means (250) and fetched from the storage means.

3. The apparatus of claim 2, further comprising means (240) for system management configured for managing the communication between the different apparatus means as well as with the device.

4. The apparatus of claim 3, wherein the user-related data is collected and the user model updated at a rate as determined by a user-definable sample frequency.

5. The apparatus of claim 3, wherein the means (220) for model managing is further configured for automatically generating the user model from the collected user-related data.

6. The apparatus of claim 5, wherein the user model is generated once a predefined number of user-related data samples have been collected.

7. The apparatus of claim 6, wherein the automatic user model generation is complemented by manual introduction of user-related data by device user.

8. The apparatus of claim 5, wherein the user model is generated and compared using user-related data based on the principal component analysis PCA technique.

9. The apparatus of claim 3, further comprising locking (550) the device if the result of the implicit authentication is negative and explicitly authenticating (560) the device user by password verification and/or biometric means, such as face recognition, or fingerprint verification.

10. The apparatus of claim 3, wherein the user-related data comprises at least one of location data history, most frequent locations, web browsing history, most frequently visited Internet pages, calls history, most frequent contacts, SMS history, application usage history, most frequently used applications, WiFi access points history, most frequented WIFI spots, list of payments, most frequent transactions, user preferences, or interaction with one's own device.

11. The apparatus of claim 3, wherein the apparatus is hosted within a secure environment of the wireless communication device, such as the trusted execution environment TEE (120).

12. The apparatus of claim 3, wherein the means (210) for managing data is further configured for pre-processing the user-related data, such as harmonizing and/or aggregating and/or summarizing the data.

13. A method in an apparatus of a wireless communication device for enhanced implicit authentication of the user of the device, wherein the method comprises performing iteratively:
receiving (510) user-related data collected from the wireless communication device, the user-related data being indicative of behavioural patterns of the device user;
implicitly authenticating (540) the device user without user-intervention by comparing the user-related data with a user model; and
updating the user model as valid using the user-related data if the result of the implicit authentication is positive and explicitly authenticating (560) the device user if the result of the implicit authentication is negative; further comprising
requesting (570) the device user for confirmation of legitimate behaviour in case the result of the explicit authentication is positive, and updating (580, 590, 595) the user model with the latest user-related data if the outcome of the legitimate confirmation is positive; and
if the result of the explicit authentication is negative, requesting (670) the device user for information corresponding to the last device usage, wherein the last device usage information comprises at least one of time, date and/or location;
fetching from the storage means the user model which best matches the last device usage information provided; and
using the fetched user model as the current user model.

14. A computer readable medium comprising instructions for performing the method steps of claim 13 once executed on a processor in a wireless communication device for enhanced implicit authentication of the user of the device.

## Patentansprüche

1. Gerät in einer drahtlosen Kommunikationsvorrichtung zur verbesserten impliziten Authentifizierung des Benutzers der Vorrichtung, wobei das Gerät umfasst:
Mittel (210) zum Verwalten von Daten, die zum Empfangen von benutzerbezogenen Daten konfiguriert sind, die von der drahtlosen Kommunikationsvorrichtung gesammelt wurden, wobei die benutzerbezogenen Daten Verhaltensmuster des Vorrichtungsbenutzers angeben;
Mittel (230) zum Verwalten der Authentifizierung, die zum impliziten Authentifizieren des Vorrichtungsbenutzers ohne Benutzereingriff durch Vergleichen der benutzerbezogenen Daten mit einem Benutzermodell konfiguriert sind; und
Mittel (220) zur Modellverwaltung, die unter Verwendung der benutzerbezogenen Daten zum Aktualisieren des Benutzermodells als gültig konfiguriert sind, wenn das Ergebnis der impliziten Authentifizierung positiv ist, und zum expliziten Authentifizieren (560) des Vorrichtungsbenutzers, wenn das Ergebnis der impliziten Authentifizierung negativ ist; ferner umfassend
Auffordern (570) des Vorrichtungsbenutzers zur Bestätigung des legitimen Verhaltens, falls das Ergebnis der expliziten Authentifizierung positiv ist, und Aktualisieren (580, 590, 595) des Benutzermodells mit den neuesten benutzerbezogenen Daten, wenn das Ergebnis der legitimen Bestätigung positiv ist; und
wenn das Ergebnis der expliziten Authentifizierung negativ ist, Auffordern (670) des Vorrichtungsbenutzers nach Informationen, die der letzten Vorrichtungsbenutzung entsprechen, wobei die letzten Vorrichtungsbenutzungsinformationen mindestens eines von Zeit, Datum und Standort umfassen;
Abrufen aus dem Speichermittel des Benutzermodells, das am besten mit den zuletzt bereitgestellten Vorrichtungsbenutzungsinformationen übereinstimmt; und
Verwenden des abgerufenen Benutzermodells als aktuelles Benutzermodell.

2. Gerät nach Anspruch 1, wobei die benutzerbezogenen Daten und das Benutzermodell in dem Speichermittel (250) gespeichert und aus dem Speichermittel abgerufen werden.

3. Gerät nach Anspruch 2, ferner umfassend Mittel (240) zur Systemverwaltung, die zum Verwalten der Kommunikation zwischen den verschiedenen Gerätemitteln sowie der Vorrichtung konfiguriert sind.

4. Gerät nach Anspruch 3, wobei die benutzerbezogenen Daten gesammelt und das Benutzermodell mit einer Rate aktualisiert wird, die durch eine benutzerdefinierbare Abtastfrequenz bestimmt wird.

5. Gerät nach Anspruch 3, wobei das Mittel (220) zur Modellverwaltung ferner zum automatischen Erzeugen des Benutzermodells aus den gesammelten benutzerbezogenen Daten konfiguriert ist.

6. Gerät nach Anspruch 5, wobei das Benutzermodell erzeugt wird, sobald eine vordefinierte Anzahl von benutzerbezogenen Datenproben gesammelt wurde.

7. Gerät nach Anspruch 6, wobei die automatische Benutzermodellerzeugung durch die manuelle Eingabe benutzerbezogener Daten durch den Vorrichtungsbenutzer ergänzt wird.

8. Gerät nach Anspruch 5, wobei das Benutzermodell unter Verwendung benutzerbezogener Daten auf Basis der PCA-Technik der Hauptkomponentenanalyse erzeugt und verglichen wird.

9. Gerät nach Anspruch 3, ferner umfassend das Sperren (550) der Vorrichtung, wenn das Ergebnis der impliziten Authentifizierung negativ ist, und das explizite Authentifizieren (560) des Vorrichtungsbenutzers durch Passwortüberprüfung und/oder biometrische Mittel wie Gesichtserkennung oder Fingerabdrucküberprüfung.

10. Gerät nach Anspruch 3, wobei die benutzerbezogenen Daten mindestens eines von Standortdatenverlauf, häufigster Standort, Browserverlauf, am häufigsten besuchte Internetseiten, Anrufverlauf, häufigste Kontakte, SMS-Verlauf, Anwendungsnutzungsverlauf, am häufigsten verwendete Anwendungen, Verlauf von WLAN-Zugangspunkten, am häufigsten genutzte WLAN-Spots, Liste von Zahlungen, häufigste Transaktionen, Benutzereinstellungen oder Interaktion mit der eigenen Vorrichtung umfasst.

11. Gerät nach Anspruch 3, wobei die Vorrichtung in einer sicheren Umgebung der drahtlosen Kommunikationsvorrichtung, wie beispielsweise der vertrauenswürdigen Ausführungsumgebung TEE (120), gehostet wird.

12. Gerät nach Anspruch 3, wobei das Mittel (210) zum Verwalten von Daten ferner zum Vorverarbeiten der benutzerbezogenen Daten konfiguriert ist, beispielsweise zum Harmonisieren und/oder Aggregieren und/oder Zusammenfassen der Daten.

13. Verfahren in einem Gerät einer drahtlosen Kommunikationsvorrichtung zur verbesserten impliziten Authentifizierung des Benutzers der Vorrichtung, wobei das Verfahren das iterative Durchführen umfasst von:
Empfangen (510) von benutzerbezogenen Daten, die von der drahtlosen Kommunikationsvorrichtung gesammelt wurden, wobei die benutzerbezogenen Daten Verhaltensmuster des Vorrichtungsbenutzers angeben;
implizites Authentifizieren (540) des Vorrichtungsbenutzers ohne Benutzereingriff durch Vergleichen der benutzerbezogenen Daten mit einem Benutzermodell; und
Aktualisieren des Benutzermodells als gültig unter Verwendung der benutzerbezogenen Daten, wenn das Ergebnis der impliziten Authentifizierung positiv ist, und explizites Authentifizieren (560) des Vorrichtungsbenutzers, wenn das Ergebnis der impliziten Authentifizierung negativ ist; ferner umfassend
Auffordern (570) des Vorrichtungsbenutzers zur Bestätigung des legitimen Verhaltens, falls das Ergebnis der expliziten Authentifizierung positiv ist, und Aktualisieren (580, 590, 595) des Benutzermodells mit den neuesten benutzerbezogenen Daten, wenn das Ergebnis der legitimen Bestätigung positiv ist; und
wenn das Ergebnis der expliziten Authentifizierung negativ ist, Auffordern (670) des Vorrichtungsbenutzers nach Informationen, die der letzten Vorrichtungsbenutzung entsprechen, wobei die letzten Vorrichtungsbenutzungsinformationen mindestens eines von Zeit, Datum und Standort umfassen;
Abrufen aus dem Speichermittel des Benutzermodells, das am besten mit den zuletzt bereitgestellten Vorrichtungsbenutzungsinformationen übereinstimmt; und
Verwenden des abgerufenen Benutzermodells als aktuelles Benutzermodell.

14. Computerlesbares Medium mit Anweisungen zum Ausführen der Verfahrensschritte nach Anspruch 13, die einmal auf einem Prozessor in einer drahtlosen Kommunikationsvorrichtung ausgeführt wurden, um die implizite Authentifizierung des Benutzers der Vorrichtung zu verbessern.

## Revendications

1. Appareil dans un dispositif de communication sans fil pour une authentification implicite améliorée de l'utilisateur du dispositif, dans lequel l'appareil comprend :
des moyens (210) pour gérer des données, configurés pour recevoir des données relatives à l'utilisateur collectées à partir du dispositif de communication sans fil, les données relatives à l'utilisateur étant indicatives de modèles de comportement de l'utilisateur du dispositif;
des moyens (230) pour gérer l'authentification, configurés pour authentifier implicitement l'utilisateur du dispositif sans intervention de l'utilisateur par comparaison des données relatives à l'utilisateur à un modèle d'utilisateur; et
des moyens (220) pour gérer un modèle, configurés pour mettre à jour le modèle d'utilisateur comme étant valable, à l'aide des données relatives à l'utilisateur si le résultat de l'authentification implicite est positif, et pour authentifier explicitement (560) l'utilisateur du dispositif si le résultat de l'authentification implicite est négatif; comprenant en outre
la requête (570) à l'utilisateur du dispositif de confirmer un comportement légitime dans le cas où le résultat de l'authentification explicite est positif et la mise à jour (580, 590, 595) du modèle d'utilisateur avec les dernières données relatives à l'utilisateur si le résultat de la confirmation légitime est positif; et
si le résultat de l'authentification explicite est négatif, la requête (670) à l'utilisateur du dispositif d'informations correspondant à la dernière utilisation du dispositif, dans lequel les informations relatives à la dernière utilisation du dispositif comprennent au moins une heure, une date et/ou un emplacement;
l'extraction, des moyens de mémoire, du modèle d'utilisateur qui correspond le mieux aux informations de la dernière utilisation du dispositif fournies; et
l'utilisation du modèle d'utilisateur extrait comme modèle d'utilisateur actuel.

2. Appareil selon la revendication 1, dans lequel les données relatives à l'utilisateur et le modèle d'utilisateur sont mémorisés dans des moyens de mémoire (250) et extraits des moyens de mémoire.

3. Appareil selon la revendication 2, comprenant en outre des moyens (240) de gestion de système configurés pour gérer la communication entre les différents moyens d'appareil ainsi qu'avec le dispositif.

4. Appareil selon la revendication 3, dans lequel les données relatives à l'utilisateur sont collectées et le modèle d'utilisateur est mis à jour à un débit déterminé par une fréquence d'échantillon pouvant être définie par l'utilisateur.

5. Appareil selon la revendication 3, dans lequel les moyens (220) de gestion de modèle sont en outre configurés pour générer automatiquement le modèle d'utilisateur à partir des données collectées relatives à l'utilisateur.

6. Appareil selon la revendication 5, dans lequel le modèle d'utilisateur est produit une fois qu'un nombre prédéfini d'échantillons de données relatifs à l'utilisateur a été collecté.

7. Appareil selon la revendication 6, dans lequel la production automatique de modèle d'utilisateur est complétée par l'introduction manuelle de données relatives à l'utilisateur par l'utilisateur du dispositif.

8. Appareil selon la revendication 5, dans lequel le modèle d'utilisateur est produit et comparé à l'aide de données relatives à l'utilisateur basées sur la technique d'analyse de composantes principales, PCA.

9. Appareil selon la revendication 3, comprenant en outre le verrouillage (550) du dispositif si le résultat de l'authentification implicite est négatif et l'authentification explicite (560) de l'utilisateur du dispositif par vérification du mot de passe et/ou par des moyens biométriques, tels que la reconnaissance faciale ou la vérification des empreintes digitales.

10. Appareil selon la revendication 3, dans lequel les données relatives à l'utilisateur comprennent au moins un élément parmi l'historique des données d'emplacement, les emplacements les plus fréquents, l'historique de navigation sur le Web, les pages Internet les plus visitées, l'historique des appels, les contacts les plus fréquents, l'historique des SMS, l'historique d'utilisation des applications, les applications les plus fréquemment utilisées, l'historique des points d'accès Wi-Fi, les points d'accès Wi-Fi les plus fréquentés, la liste des paiements, les transactions les plus fréquentes, les préférences de l'utilisateur ou l'interaction avec son propre dispositif.

11. Appareil selon la revendication 3, dans lequel l'appareil est hébergé au sein d'un environnement sécurisé du dispositif de communication sans fil, tel que l'environnement d'exécution sécurisé, TEE, (120).

12. Appareil selon la revendication 3, dans lequel les moyens (210) pour gérer des données sont en outre configurés pour prétraiter les données relatives à l'utilisateur, telles que l'harmonisation et/ou l'agrégation et/ou la synthèse des données.

13. Procédé dans un appareil d'un dispositif de communication sans fil pour une authentification implicite améliorée de l'utilisateur du dispositif, dans lequel le procédé comprend l'exécution itérative de:
la réception (510) de données relatives à l'utilisateur collectées à partir du dispositif de communication sans fil, les données relatives à l'utilisateur étant indicatives des modèles de comportement de l'utilisateur du dispositif;
l'authentification implicite (540) de l'utilisateur du dispositif sans intervention de l'utilisateur par comparaison des données relatives à l'utilisateur à un modèle d'utilisateur; et
la mise à jour du modèle d'utilisateur comme valable à l'aide des données relatives à l'utilisateur si le résultat de l'authentification implicite est positif et l'authentification explicite (560) de l'utilisateur du dispositif si le résultat de l'authentification implicite est négatif; comprenant en outre
la requête (570) à l'utilisateur du dispositif de confirmer un comportement légitime dans le cas où le résultat de l'authentification explicite est positif et la mise à jour (580, 590, 595) du modèle d'utilisateur avec les dernières données relatives à l'utilisateur si le résultat de la confirmation légitime est positif; et
si le résultat de l'authentification explicite est négatif, la requête (670) à l'utilisateur du dispositif d'informations correspondant à la dernière utilisation du dispositif, dans lequel les informations relatives à la dernière utilisation du dispositif comprennent au moins une heure, une date et/ou un emplacement;
l'extraction, des moyens de mémoire, du modèle d'utilisateur qui correspond le mieux aux informations de la dernière utilisation du dispositif fournies; et
l'utilisation du modèle d'utilisateur extrait comme modèle d'utilisateur actuel.

14. Support lisible par ordinateur comprenant des instructions pour effectuer les étapes de procédé de la revendication 13 lorsqu'elles sont exécutées sur un processeur dans un dispositif de communication sans fil pour une authentification implicite améliorée de l'utilisateur du dispositif.
